# EUROPÄISCHE PATENTSCHRIFT

(11) **EP 3 512 811 B1**
(45) Veröffentlichungstag und Bekanntmachung des Hinweises auf die Patenterteilung: **10.05.2023**
(21) Anmeldenummer: 17765387.0
(22) Anmeldetag: 04.09.2017
(51) Int. Cl.: C01G 47/00, B01J 23/36, C22B 61/00

(54) **VERFAHREN ZUR HERSTELLUNG VON AMMONIUMPERRHENAT**
PROCESS FOR THE PRODUCTION OF AMMONIUM PERRHENATE
PROCÉDÉ DE PRÉPARATION DE PERRHÉNATE D'AMMONIUM

(30) Priorität: 13.09.2016 DE 102016010977
(43) Veröffentlichungstag der Anmeldung: 24.07.2019
(73) Patentinhaber: Höganäs Germany GmbH, 38642 Goslar (DE)
(72) Erfinder: WEDDE, Gerhard, 38667 Bad Harzburg (DE); MUELLER, Thomas, 38685 Langelsheim (DE)
(74) Vertreter: Blurock, Maryna
(86) Internationale Anmeldenummer: PCT/EP2017/072112
(87) Internationale Veröffentlichungsnummer: WO 2018/050472

(56) Entgegenhaltungen:
- EP-A1- 0 568 407
- DE-A1-102008 026 910
- C. D. ANDERSON ET AL: "Extractive Metallurgy of Rhenium: A Review", MINERALS AND METALLURGICAL PROCESSING, Bd. 30, Nr. 1, 1. Februar 2013 (2013-02-01), Seiten 59-73, XP055423305,

## Beschreibung

Die vorliegende Anmeldung betrifft ein Verfahren zur Herstellung von Ammoniumperrhenat (APR), das den Einsatz von Ca(OH)₂ umfasst sowie Ammoniumperrhenat, das gemäß dem erfindungsgemäßen Verfahren erhältlich ist.

Ammoniumperrhenat (APR) ist ein weißes Pulver, das sich durch seine vollständige Wasserlöslichkeit auszeichnet. Ammoniumperrhenat dient als Vorstoff bei der Herstellung von Rheniummetallpulver und -pellets, die ein wichtiger Zusatzstoff in Superlegierungen sind, und wird bei der Herstellung von Rheniumsäure eingesetzt. Halbzeuge und Fertigprodukte wie Anodenplatten für medizinische Anwendungen verwenden ebenfalls Rheniummetallpulver.

Direkte Anwendung findet Ammoniumperrhenat bei der Herstellung von Katalysatoren, insbesondere bei der Herstellung von Platin-Rhenium-Katalysatoren, die in der Raffinerie von Rohöl eingesetzt werden.

Insbesondere der Einsatz von Ammoniumperrhenat bei der Herstellung von Katalysatoren stellt höchste Anforderungen an die Reinheit und vollständige Löslichkeit des Ammoniumperrhenats. So ergibt die vollständige Löslichkeit einen besonders gleichmäßigen Katalysator, da das Rhenium in vollem Umfang genutzt werden kann. Die hohe Reinheit des Ammoniumperrhenats garantiert, dass der Katalysator frei von Verunreinigungen ist, die im späteren Einsatz zu einer Beeinträchtigung der Leistungsfähigkeit führen könnten.

Im Stand der Technik sind zahlreiche Verfahren zur Herstellung von Ammoniumperrhenat bekannt. Dabei wird eine rheniumhaltige Lösung in der Regel mit Natronlauge (NaOH) und Wasserstoffperoxid (H₂O₂) alkalisch gelöst und das Filtrat mittels Ionenaustauscher gereinigt. Die Gewinnung erfolgt bei herkömmlichen Herstellungsverfahren üblicherweise durch Waschen des Ionenaustauschers mit Salzsäure, die in einem weiteren Schritt verdampft wird, um an das eigentliche Produkt zu gelangen.

DE 42 07 137 beschreibt ein Verfahren zur selektiven Abtrennung von Rhenium aus sauren, molybdänhaltigen Lösungen, bei dem das Rhenium auf einem Absorbens (Harz oder Lösungsmittel) auf Basis von sekundären oder tertiären Aminen fixiert wird. Das mit reinem Rhenium beladene Absorbens wird mit einer basischen Lösung eluiert, um eine Endlösung reinen Perrhenats, beispielsweise Ammoniumperrhenat, zu erhalten.

Die herkömmlichen im Stand der Technik beschriebenen Verfahren zur Herstellung von Ammoniumperrhenat haben jedoch den Nachteil, dass sie kosten- und zeitintensiv sind, wobei vor allem das Be- und Entladen des Ionenaustauschers und das Verdampfen der Salzsäure zu Buche schlagen. Weiterhin erfordert das Verfahren eine aufwendige Aufarbeitung der Abwässer bevor diese in die Abwasserentsorgung gegeben werden können.

US 3,376,104 offenbart ein Verfahren zur Gewinnung von Rhenium und Molybdänoxid aus den entsprechenden Sulfiderzen. Dazu wird das Erz mit Ca(OH)₂ oder CaCO₃ gemischt und auf 566 bis 732 °C erwärmt, um Calciumperrhenat und Calciummolybdat zu erhalten, wobei die Wasserlöslichkeit des Calciumperrhenats zu dessen Abtrennung genutzt wird.

US 3,244,475 beschreibt ein Verfahren zur Trennung von Rhenium und Molybdän aus einer wässrigen Lösung durch Zugabe von Kerosin, das eine Ammoniumverbindung der Formel R₃(CH₃)NCl enthält, wobei R ein gesättigter, linearer C₈-C₁₀ Kohlenwasserstoffrest ist. Das so gewonnene Rhenium kann als Ammoniumperrhenat durch Waschen der organischen Phase mit Perchlorsäure und einem löslichen Perchlorat isoliert werden.

Weitere Verfahren zur Herstellung von Ammoniumperrhenat sind aus C. D. ANDERSON ET AL: "Extractive Metallurgy of Rhenium: A Review", MINERALS AND METALLURGICAL PROCESSING, Bd. 30, Nr.1 Seiten 59-73, bekannt.

Auch diese Verfahren sind jedoch nicht geeignet, die angesprochenen Nachteile zu überwinden. Es ist daher die Aufgabe der vorliegenden Erfindung, ein Verfahren zur Herstellung von Ammoniumperrhenat zur Verfügung zu stellen, das nicht nur ein hochreines Produkt liefert, sondern auch die Durchlaufzeiten bei der Herstellung reduziert und damit eine unnötige Kapitalbindung verhindert.

Es wurde überraschend gefunden, dass die Behandlung einer wässrigen Lösung umfassend rheniumhaltige Verbindungen mit Ca(OH)₂ den Verzicht auf einen Ionenaustauscher erlaubt, ohne dass die Reinheit oder Wasserlöslichkeit des Produktes beeinträchtigt werden. Gegenstand der vorliegenden Erfindung ist daher ein Verfahren zur Herstellung von Ammoniumperrhenat, das die folgenden Schritte umfasst:
a) Bereitstellen einer wässrigen Suspension umfassend Rhenium-haltige Verbindungen;
b) Zugeben von Ca(OH)₂ zu der Suspension aus Schritt a), wobei der pH-Wert größer 7 ist;
c) Zugeben eines Oxidationsmittels zu der wässrigen Suspension aus Schritt b), wobei die Temperatur der Suspension 50 °C nicht übersteigt;
d) Erwärmen der Suspension aus Schritt c) auf mindestens 95 °C und anschließendes Filtrieren, wobei die Suspension vor der Filtration auf 60 °C oder weniger abgekühlt wird;
e) Zugeben eines Ammoniumcarbonats zu dem Filtrat aus Schritt d) unter Erhalt einer wässrigen Suspension enthaltend Ammoniumperrhenat;
f) Filtrieren der Suspension aus Schritt e);
g) Reduzieren der Flüssigkeitsmenge des Filtrats aus Schritt f) unter Erhalt von festem Ammoniumperrhenat.

Es wurde überraschend gefunden, dass das erfindungsgemäße Verfahren ohne Ionenaustauscher auskommt, so dass der kosten- und zeitintensive Schritt des Be- und Entladens des Ionenaustauschers sowie eine aufwendige Abwasseraufbereitung wegfallen, wodurch nicht nur Kosten eingespart werden, sondern auch die Durchlaufzeit deutlich reduziert wird. So liegt die Durchlaufzeit des erfindungsgemäßen Verfahrens im Bereich von 48 bis 72 Stunden. Im Gegensatz dazu erfordert der Einsatz eines Ionenaustauschers an eine Mindestmenge an Material, wodurch sich die Durchlaufzeiten deutlich verlängern. Insbesondere der Einsatz von Ca(OH)₂ anstatt des herkömmlichen NaOH erlaubt eine effiziente und einfache Abtrennung des Rheniums, ohne dass die Verwendung eines Ionenaustauschers nötig wäre.

Aufgrund der begrenzten Verfügbarkeit von Rhenium sowie der hohen Nachfrage, gewinnt die Wiedergewinnung von Rhenium eine immer größere Bedeutung. Als Rheniumquellen dienen dabei beispielsweise Metallabfälle, Halbzeugprodukte und Superlegierungen. Daher ist eine Ausführungsform des erfindungsgemäßen Verfahrens bevorzugt, bei der die Rhenium-haltigen Verbindungen in Schritt a) aus Rhenium-haltigen Abfällen gewonnen werden. Das Rhenium kann dabei etwa in Form seiner Sulfide oder Oxide vorliegenden. Besonders bevorzugt handelt es sich bei den Rhenium-haltigen Abfällen um solche, die aus Rheniummetall-abfällen, wie Halbzeugprodukte, Superlegierungen und Katalysatoren erhalten werden. Vorzugsweise sind die Rhenium-haltigen Verbindungen ausgewählt aus der Gruppe bestehend aus ReS₂, Re₂S₇, ReO₂ sowie Mischungen hiervon.

Vorzugsweise wird die Suspension in Schritt a) des erfindungsgemäßen Verfahrens durch Behandeln von Rhenium-haltigen Verbindungen in Wasser in Gegenwart von Säure gewonnen. Bei der verwendeten Säure handelt es sich vorzugsweise um eine anorganische Säure, wie beispielsweise Salzsäure oder Schwefelsäure, insbesondere Salzsäure. Die Metallabfälle können beispielsweise zu einem Pulver gemahlen und mit Salzsäure versetzt werden. Insbesondere bei der Aufarbeitung von Legierungsabfällen kann die Abtrennung des Rheniums von den anderen Bestandteilen wie Nickel, Chrom oder Kobalt dadurch verbessert werden, dass Salzsäure mit einer Konzentration oberhalb von 10 % bei Temperaturen oberhalb von 70 °C verwendet wird. Sehr gute Ergebnisse lassen sich mit 20 % Salzsäure, die auf etwa 90 °C erwärmt wird, erzielen. Alternative, dem Fachmann bekannte Methoden, können ebenfalls zur Herstellung der wässrigen Suspension enthaltend Rhenium-haltige Verbindungen herangezogen werden.

In einer besonders bevorzugten Ausführungsform enthält die Suspension in Schritt a) des erfindungsgemäßen Verfahrens neben Rhenium-haltigen Verbindungen weitere Verbindungen. Bei diesen weiteren Verbindungen handelt es sich insbesondere um Metallverbindungen, wobei das Metall ausgewählt ist aus der Gruppe bestehend aus Molybdän, Wolfram, Tantal, Kobalt, Kupfer, Chrom und Nickel sowie Mischungen hiervon.

In Schritt b) des erfindungsgemäßen Verfahrens wird die Suspension aus Schritt a) mit Ca(OH)₂ versetzt, wobei der pH-Wert größer als 7 ist. Insbesondere die Verwendung von Ca(OH)₂ in diesem Schritt des erfindungsgemäßen Verfahrens erlaubt die effiziente Abtrennung des Rheniums aus der Ausgangslösung, so dass auf die in herkömmlichen Verfahren erforderliche Reinigung mittels Ionenaustauschers verzichtet werden kann.

Die in Schritt b) des erfindungsgemäßen Verfahrens erhaltene Suspension wird mit einem Oxidationsmittel versetzt, wobei die Temperatur der Suspension 50°C nicht übersteigen soll (Schritt c)). Vorzugsweise liegt die Temperatur in einem Bereich von 30 bis 50 °C. Eine niedrigere Temperatur resultiert in einer unzureichenden Oxidation der Rhenium-haltigen Verbindung. Wird die Temperatur zu hoch gewählt, führt dies zu einer Zersetzung des Oxidationsmittels, ohne dass die gewünschte Oxidation abläuft. Das verwendete Oxidationsmittel ist vorzugsweise ausgewählt aus Wasserstoffperoxid, Chloraten und Perchloraten. Insbesondere ist das Oxidationsmittel Wasserstoffperoxid.

Nach der Oxidation wird die Suspension aus Schritt c) auf eine Temperatur von mindestens 95 °C erwärmt, vorzugsweise 95 bis 110 °C. Vorzugsweise wird die Suspension für eine Zeit von 5 bis 20 Stunden, besonders bevorzugt 10 bis 15 Stunden bei dieser Temperatur gehalten. Auf diese Weise kann ein vollständiges Lösen des Rheniums erreicht werden. Anschließend wird die Suspension vorzugsweise auf eine Temperatur unterhalb von 60 °C abgekühlt, vorzugsweise auf eine Temperatur im Bereich von 40 bis 60 °C, insbesondere 45 bis 55 °C. Nach dem Abkühlen wird die Suspension filtriert. Es wurde überraschend gefunden, dass eine Temperatur außerhalb des angegebenen Bereichs zu einem unerwünschten Produktverlust während der Filtration führt.

Nach der Filtration in Schritt d) des erfindungsgemäßen Verfahrens wird das erhaltene Filtrat mit einem Ammoniumcarbonat versetzt, so dass eine wässrige Suspension enthalten Ammoniumperrhenat erhalten wird. Das Ammoniumcarbonat ist dabei vorzugsweise ausgewählt aus Ammonium-hydrogencarbonat (NH₄HCO₃) und Ammoniumcarbonat ((NH₄)₂CO₃). Es wurde überraschend gefunden, dass die Verwendung eines Ammoniumcarbonats Ammoniumperrhenat in hoher Ausbeute und mit einem hohen Reinheitsgrad liefert.

In einer bevorzugten Ausführungsform des erfindungsgemäßen Verfahrens kann die Suspension in Schritt e) auf eine Temperatur im Bereich von 50 bis 70 °C, vorzugsweise 60 bis 70 °C erwärmt werden. Es hat sich überraschend gezeigt, dass durch das zusätzliche Erwärmen die Ausbeute an Ammoniumperrhenat erhöht werden kann.

In einem weiteren Schritt (Schritt f) des erfindungsgemäßen Verfahrens) wird die Suspension aus Schritt e) filtriert. Es wurde überraschend gefunden, dass Ausbeuteverluste vermieden werden können, wenn die Suspension beim Filtrieren eine Temperatur von 60 °C nicht übersteigt. Daher liegt die Temperatur der Suspension bei der Filtration vorzugsweise im Bereich von 40 bis 60 °C, insbesondere 45 bis 55 °C. Die Filtration kann dabei nach üblichen, dem Fachmann bekannten Methoden, vorgenommen werden. Vorzugsweise erfolgt die Filtration in einer Filterpresse.

In Schritt g) des erfindungsgemäßen Verfahrens wird die Flüssigkeitsmenge des Filtrats aus Schritt f) unter Erhalt des Ammoniumperrhenats in fester Form reduziert. Die Reduktion der Flüssigkeit kann dabei gemäß dem Fachmann bekannter Methoden, beispielsweise unter vermindertem Druck, erfolgen.

Das so erhaltene Ammoniumperrhenat kann weiteren Reinigungsschritten wie beispielsweise einer Umkristallisation unterzogen werden.

Wie bereits ausgeführt, dient Ammoniumperrhenat als Vorstufe bei der Herstellung von Rheniummetallpulver oder -pellets sowie Rheniumsäure. Daher wird in einer bevorzugten Ausführungsform das gewonnene Ammoniumperrhenat weiter zu Rhenium umgesetzt.

Das erfindungsgemäße Verfahren liefert Ammoniumperrhenat mit einem Reinheitsgehalt, der deutlich über dem liegt, der mit herkömmlichen Herstellungsverfahren erzielt wird.

Daher betrifft ein weiterer Gegenstand der vorliegenden Erfindung Ammoniumperrhenat, das gemäß dem erfindungsgemäßen Verfahren erhältlich ist.

Der theoretisch erreichbare Gehalt an Rhenium in Ammoniumperrhenat liegt bei 69,41 %. Es wurde überraschend gefunden, dass Ammoniumperrhenat gemäß der vorliegenden Erfindung einen Rheniumgehalt von mindestens 62 % bezogen auf das Gesamtgewicht des Ammoniumperrhenats aufweist, der durch weitere Reinigungsschritte auf den theoretisch maximal möglichen Wert von 69,4% gesteigert werden kann. Im Gegensatz dazu weist Ammoniumperrhenat, das beispielsweise mittels Ionenaustauscher hergestellt wurde, einen Rheniumgehalt im Bereich von 50 bis 60 % auf. Daher ist eine Ausführungsform bevorzugt, in der das erfindungsgemäße Ammoniumperrhenat einen Gehalt an Rhenium von mindestens 67%, bezogen auf das Gesamtgewicht des Ammoniumperrhenats aufweist.

Ein weiteres Kriterium für die Reinheit und Qualität von Ammoniumperrhenat ist dessen Wassergehalt. Während ein mittels herkömmlichen Verfahren hergestelltes Ammoniumperrhenat einen Wassergehalt von 15 bis 25 % aufweist, wurde überraschend gefunden, dass der Wassergehalt des mittels des erfindungsgemäßen Verfahrens erhältlichen Ammoniumperrhenats deutlich geringer ist. So weist das erfindungsgemäße Ammoniumperrhenat einen Wassergehalt von weniger als 5 %, bezogen auf das Gesamtgewicht des Ammoniumperrhenats auf, vorzugsweise einen Wassergehalt im Bereich von 0,1 bis 5 %, bevorzugt 0,1 bis 4,5 % und besonders bevorzugt 0,1 bis 3 %, jeweils bezogen auf das Gesamtgewicht des Ammoniumperrhenats.

Ammoniumperrhenat findet eine breite Anwendung in Industrie und Technik. Daher ist ein weiterer Gegenstand der vorliegenden Erfindung die Verwendung des erfindungsgemäßen Ammoniumperrhenats für die Herstellung von Katalysatoren, in der Rheniummetallproduktion, bei der Herstellung von Superlegierungen sowie in der Rheniumsäureproduktion.

### Beispiele:

### Beispiel 1:

Es wurde Ammoniumperrhenat aus einer Rhenium-haltigen Verbindung gemäß dem erfindungsgemäßen Verfahren der vorliegenden Erfindung hergestellt.

Es werden 400 kg Rheniumsulfid in 4 m³ Wasser suspendiert und anschließend 400 kg Ca(OH)₂ zugegeben, so dass sich ein pH-Wert oberhalb von 7 einstellt. Anschließend werden 400 L Wasserstoffperoxid (30%ige wässrige Lösung) bei einer Temperatur von etwa 40 °C zugegeben. Nach der Oxidation wird die Suspension auf 95 °C aufgewärmt und 12 Stunden bei dieser Temperatur gehalten.

Die Suspension wird anschließend auf 60 °C abgekühlt und mit einer Pumpe einer Filterpresse zugeführt und gefiltert.

Das Filtrat wird auf 60 °C gehalten und Ammoniumhydrogencarbonat zugegeben zur Ausbildung von Ammoniumperrhenat. Die so erhaltene Suspension wird anschließend bei 50 °C in einer Filterpresse filtriert. Das Filtrat wird anschließend unter vermindertem Atmosphärendruck getrocknet.

Die Analyse des erhaltenen Ammoniumperrhenats ergab einen Rheniumgehalt von 67,09 Gew.-%.

### Vergleichsversuch:

Ein Rheniumsulfid-Konzentrat (Re₂S₇) wurde gemäß Stand der Technik mit NaOH und H₂O₂ alkalisch gelöst und anschließend über einen Ionenaustauscher sowie anschließende Rückgewinnung des Rheniums durch Verdampfen erhalten.

Der Rheniumgehalt des gemäß Stand der Technik bekannten Verfahrens ergab einen Wert von 58,55 Gew.-%.

Das erfindungsgemäße Verfahren führt zudem zu Produkten mit einem geringen Wassergehalt.

## Patentansprüche

1. Verfahren das die folgenden Schritte umfasst:
a) Bereitstellen einer wässrigen Suspension umfassend Rhenium-haltige Verbindungen;
b) Zugeben von Ca(OH)₂ zu der Suspension aus Schritt a), wobei der pH-Wert größer 7 ist;
c) Zugeben eines Oxidationsmittels zu der wässrigen Suspension aus Schritt b), wobei die Temperatur der Suspension 50°C nicht übersteigt;
d) Erwärmen der Suspension aus Schritt c) auf mindestens 95°C und anschließendes Filtrieren, wobei die Suspension vor der Filtration auf 60°C oder weniger abgekühlt wird;
e) Zugeben eines Ammoniumcarbonats zu dem Filtrat aus Schritt d) unter Erhalt einer wässrigen Suspension enthaltend Ammoniumperrhenat;
f) Filtrieren der Suspension aus Schritt e);
g) Reduzieren der Flüssigkeitsmenge des Filtrats aus Schritt f) unter Erhalt von festem Ammoniumperrhenat.

2. Verfahren nach Anspruch 1, **dadurch gekennzeichnet, dass** die Rhenium-haltigen Verbindungen aus Rhenium-haltigen Abfällen gewonnen werden.

3. Verfahren nach Anspruch 1 oder 2, **dadurch gekennzeichnet, dass** die wässrige Suspension in Schritt a) durch Versetzten der Rhenium-haltigen Verbindungen in Wasser in Gegenwart von Säure hergestellt wird.

4. Verfahren nach einem oder mehreren der vorgehenden Ansprüche, **dadurch gekennzeichnet, dass** die Rhenium-haltigen Verbindungen ausgewählt sind aus der Gruppe bestehend aus ReS₂, Re₂S₇,und ReO₂.

5. Verfahren nach einem oder mehreren der vorgehenden Ansprüche, **dadurch gekennzeichnet, dass** das Oxidationsmittel in Schritt c) ausgewählt ist aus der Gruppe bestehend aus Wasserstoffperoxid, Chloraten und Perchloraten sowie Mischungen hiervon.

6. Verfahren nach einem oder mehreren der vorgehenden Ansprüche, **dadurch gekennzeichnet, dass** das Ammoniumcarbonat ausgewählt ist aus Ammoniumcarbonat und Ammoniumhydrogencarbonat.

7. Verfahren nach einem oder mehreren der vorgehenden Ansprüche, **dadurch gekennzeichnet, dass** die Suspension in Schritt e) auf eine Temperatur im Bereich von 50 bis 70°C, vorzugsweise 60 bis 70°C erwärmt wird.

8. Verfahren nach einem oder mehreren der vorgehenden Ansprüche, **dadurch gekennzeichnet, dass** das Ammoniumperrhenat weiteren Reinigungsschritten unterzogen wird.

9. Verfahren nach einem oder mehreren der vorgehenden Ansprüche, **dadurch gekennzeichnet, dass** das Ammoniumperrhenat weiter zu Rheniummetall umgesetzt wird.

10. Ammoniumperrhenat erhältlich nach einem Verfahren gemäß der Ansprüche 1 bis 8 und **dadurch gekennzeichnet, dass** es einen Rheniumgehalt von mindestens 62% vorzugsweise mindestens 67%, bezogen auf das Gesamtgewicht des Ammoniumperrhenats aufweist und dass der Wassergehalt weniger als 5%, vorzugsweise 0,1 bis 5%, vorzugsweise 0,1 bis 4,5%, besonders bevorzugt 0,1 bis 3% beträgt, jeweils bezogen auf das Gesamtgewicht des Ammoniumperrhenats.

11. Verwendung des Ammoniumperrhenats gemäß Anspruch 10 zur Herstellung von Katalysatoren.

12. Verwendung des Ammoniumperrhenats gemäß Anspruch 10 in der Rheniummetallproduktion.

## Claims

1. Method, comprising the following steps:
a) providing an aqueous suspension comprising rhenium-containing compounds;
b) adding Ca(OH)₂ to the suspension from step a), wherein the pH value is greater than 7;
c) adding an oxidant to the aqueous suspension from step b), wherein the temperature of the suspension does not exceed 50 °C;
d) heating the suspension from step c) to at least 95 °C and subsequent filtering, wherein the suspension is cooled to 60 °C or less prior to filtration;
e) adding an ammonium carbonate to the filtrate from step d), thus obtaining an aqueous suspension containing ammonium perrhenate;
f) filtering the suspension from step e);
g) reducing the liquid volume of the filtrate from step f), thus obtaining solid ammonium perrhenate.

2. Method according to Claim 1, **characterised in that** the rhenium-containing compounds are extracted from rhenium-containing waste.

3. Method according to Claim 1 or 2, **characterised in that** the aqueous suspension in step a) is manufactured by admixing the rhenium-containing compounds in water in the presence of acid.

4. Method according to one or more of the preceding claims, **characterised in that** the rhenium-containing compounds are selected from the group consisting of ReS₂, Re₂S₇,and ReO₂.

5. Method according to one or more of the preceding claims, **characterised in that** the oxidant in step c) is selected from the group consisting of hydrogen peroxide, chlorates and perchlorates as well as combinations thereof.

6. Method according to one or more of the preceding claims, **characterised in that** the ammonium carbonate is selected from ammonium carbonate and ammonium hydrogen carbonate.

7. Method according to one or more of the preceding claims, **characterised in that** the suspension in step e) is heated to a temperature in the range of 50 to 70 °C, preferably 60 to 70 °C.

8. Method according to one or more of the preceding claims, **characterised in that** the ammonium perrhenate is subjected to further purifying steps.

9. Method according to one or more of the preceding claims, **characterised in that** the ammonium perrhenate is further converted to rhenium metal.

10. Ammonium perrhenate, obtainable by a method according to steps 1 to 8 and **characterised in that** it has a rhenium content of at least 62%, preferably at least 67%, with respect to the total weight of the ammonium perrhenate, and that the water content is less than 5%, preferably 0.1 to 5%, preferably 0.1 to 4.5%, particularly preferably 0.1 to 3%, with respect to the total weight of the ammonium perrhenate.

11. Use of the ammonium perrhenate according to Claim 10 for the manufacture of catalytic converters.

12. Use of the ammonium perrhenate according to Claim 10 in the production of rhenium metal.

## Revendications

1. Procédé comprenant les étapes suivantes :
a) préparation d'une suspension aqueuse comprenant des composés contenant du rhénium ;
b) ajout du Ca(OH)₂ à la suspension de l'étape a), le pH étant supérieur à 7 ;
c) ajout d'un agent oxydant à la suspension aqueuse de l'étape b), la température de la suspension ne dépassant pas 50 °C ;
d) chauffage de la suspension de l'étape c) à au moins 95°C, suivi d'une filtration, la suspension étant refroidie à 60°C ou moins avant la filtration ;
e) ajout d'un carbonate d'ammonium au filtrat de l'étape d) pour obtenir une suspension aqueuse contenant du perphénate d'ammonium ;
f) filtrage de la suspension de l'étape e) ;
g) réduction de la quantité de liquide du filtrat de l'étape f) pour obtenir du perrhénate d'ammonium solide.

2. Procédé selon la revendication 1, **caractérisé en ce que** les composés contenant du rhénium sont obtenus à partir de déchets contenant du rhénium.

3. Procédé selon la revendication 1 ou 2, **caractérisé en ce que** la suspension aqueuse est préparée dans l'étape a) en mélangeant les composés contenant du rhénium dans l'eau en présence d'un acide.

4. Procédé selon une ou plusieurs des revendications précédentes, **caractérisé en ce que** les composés contenant du rhénium sont choisis dans le groupe constitué par ReS₂, Re₂S₇ et ReO₂.

5. Procédé selon une ou plusieurs des revendications précédentes, **caractérisé en ce que** l'agent oxydant dans l'étape c) est choisi dans le groupe constitué par le peroxyde d'hydrogène, les chlorates et les perchlorates, ainsi que leurs mélanges.

6. Procédé selon une ou plusieurs des revendications précédentes, **caractérisé en ce que** le carbonate d'ammonium est choisi parmi le carbonate d'ammonium et l'hydrogénocarbonate d'ammonium.

7. Procédé selon une ou plusieurs des revendications précédentes, **caractérisé en ce que**, à l'étape e), la suspension est chauffée à une température comprise dans la plage de 50 à 70 °C, de préférence de 60 à 70°C.

8. Procédé selon une ou plusieurs des revendications précédentes, **caractérisé en ce que** le contrephénate d'ammonium est soumis à d'autres étapes de purification.

9. Procédé selon une ou plusieurs des revendications précédentes, **caractérisé en ce que** le perrhénate d'ammonium est encore transformé en rhénium métallique.

10. Perrhénate d'ammonium pouvant être obtenu par un procédé selon les revendications 1 à 8 et **caractérisé en ce qu'**il présente une teneur en rhénium d'au moins 62 %, de préférence d'au moins 67%, par rapport au poids total du perrhénate d'ammonium et **en ce que** la teneur en eau est inférieure à 5 %, de préférence de 0,1 à 5 %, de préférence de 0,1 à 4,5 %, de manière particulièrement préférée de 0,1 à 3 %, dans chaque cas par rapport au poids total du perrhénate d'ammonium.

11. Utilisation du perrhénate d'ammonium selon la revendication 10 pour la préparation de catalyseurs.

12. Utilisation du perrhénate d'ammonium selon la revendication 10 dans la production de rhénium métallique.
